# FASCICULE DE BREVET EUROPEEN

(11) **EP 4 077 887 B1**
(45) Date de publication et mention de la délivrance du brevet: **22.11.2023**
(21) Numéro de dépôt: 20845787.9
(22) Date de dépôt: 18.12.2020
(51) Int. Cl.: F01D 25/18, F02C 7/06, F01D 15/10, B01D 45/08

(54) **TURBOGENERATEUR POUR AERONEF, COMPRENANT UN SYSTÈME D'HUILE AMÉLIORÉ**
TURBOGENERATOR FÜR FLUGZEUGE MIT VERBESSERTEM ÖLSYSTEM
TURBOGENERATOR FOR AIRCRAFT, COMPRISING AN IMPROVED OIL SYSTEM

(30) Priorité: 20.12.2019 FR 1915265
(43) Date de publication de la demande: 26.10.2022
(73) Titulaire: Safran Helicopter Engines, 64510 Bordes (FR); Safran Power Units, 31200 Toulouse (FR)
(72) Inventeur: SERGHINE, Camel, 77550 MOISSY-CRAMAYEL (FR); REAL, Denis Antoine Julien, 77550 MOISSY-CRAMAYEL (FR)
(74) Mandataire: Gevers & Orès
(86) Numéro de dépôt international: PCT/FR2020/052522
(87) Numéro de publication internationale: WO 2021/123657

(56) Documents cités:
- WO-A1-2018/051080
- FR-A- 1 264 170
- US-A1- 2019 195 091

## Description

### Domaine technique de l'invention

La présente invention se rapporte à un turbogénérateur pour un aéronef.

### Arrière-plan technique

Un aéronef hybride électrique est par exemple propulsé à l'aide de plusieurs propulseurs électriques comprenant chacun une hélice entrainée par un actionneur électrique (par exemple un moteur électrique).

En fonction des différentes phases de vol, chaque moteur électrique peut être alimenté électriquement via un turbogénérateur et/ou via des batteries. Le turbogénérateur peut également être utilisé pour recharger les batteries. Un turbogénérateur comprend un turbomoteur et au moins une génératrice électrique, la génératrice électrique transformant la puissance mécanique générée par le turbomoteur en une puissance électrique destinée à l'alimentation des propulseurs ou à être stockée au sein des batteries. Classiquement, le turbomoteur comprend un circuit primaire dans lequel un flux d'air est comprimé puis mélangé avec un carburant avant d'être brûlé, les gaz d'échappement obtenus étant utilisés pour entrainer diverses turbines. Le turbomoteur comprend également un circuit secondaire dans lequel circule notamment de l'air et de l'huile utilisés principalement pour refroidir, étanchéifier et lubrifier le turbomoteur. L'air et l'huile sont injectés dans le circuit secondaire à différents endroits selon les besoins.

Le circuit secondaire comprend généralement une enceinte disposée à l'amont du turbomoteur dans laquelle est collectée la majeure partie de l'air, l'air étant dans cette enceinte chargé en huile.

Afin de réguler la pression dans l'enceinte tout en limitant les pertes d'huile, il est connu d'expulser de l'air via un décanteur cinétique ou dynamique (par exemple un décanteur centrifuge) placé dans l'enceinte dont la fonction est de séparer l'huile et l'air. En sortie du décanteur, l'huile séparée (ou isolée) est stockée dans un réservoir et l'air déshuilé est par exemple injecté dans la tuyère d'échappement du turbomoteur.

Un tel décanteur cinétique n'apporte pas entièrement satisfaction. En effet, les motoristes constatent que l'air déshuilé en sortie du décanteur contient une quantité non négligeable d'huile. Ces pertes d'huile imposent des opérations de maintenance régulières pour assurer le remplissage en huile des différents réservoirs. Les motoristes cherchent à accroitre l'efficacité de la décantation au sein du décanteur de manière à allonger l'intervalle de temps entre deux opérations de maintenance. Il est bon de rappeler que l'encombrement disponible dans l'enceinte pour implanter un décanteur est réduit, et qu'il est également primordial d'optimiser la masse globale du turbogénérateur. L'objectif de la présente invention est donc d'apporter une solution simple, efficace et économique permettant de répondre aux problématiques précitées. L'art antérieur comprend également les documents WO-A1-2018/051080, FR-A-1264170 et US-A1 -2019/195091.

### Résumé de l'invention

L'invention propose ainsi un turbogénérateur pour un aéronef comprenant :
- un turbomoteur ;
- une génératrice électrique comprenant un rotor entrainé mécaniquement par le turbomoteur et un stator soutenu par un carter de la génératrice électrique; caractérisé en ce que le turbogénérateur comprend un décanteur statique d'un mélange air/huile provenant du turbomoteur, le décanteur statique étant positionné autour du carter de la génératrice électrique.

Un tel décanteur statique présente des performances satisfaisantes, et notamment un excellent rapport (ou ratio) qualité de décantation/encombrement.

L'espace inexploité sur le pourtour de la génératrice électrique est utilisé pour implanter un décanteur statique. En particulier, l'espace important à disposition autour du carter (comparé à l'espace disponible dans l'enceinte du circuit secondaire) permet d'implanter un décanteur statique aux dimensions optimisées et d'accroitre en conséquence la qualité de la décantation. Ainsi, de manière générale, un tel positionnement de la génératrice électrique permet d'allonger l'intervalle de temps entre deux opérations de maintenance.

Le positionnement du décanteur statique permet également à celui-ci de participer au refroidissement du rotor et du stator de la génératrice électrique. Les besoins de refroidissement complémentaires, par l'intermédiaire par exemple d'un circuit de refroidissement à huile, sont ainsi limités.

Le turbogénérateur selon l'invention peut comprendre une ou plusieurs des caractéristiques et/ou étapes suivantes:
- au moins une paroi du décanteur statique est formée par le carter de la génératrice électrique ;
- le décanteur statique comprend :
   - une chambre de décantation du mélange air/huile ;
   - une pluralité de chicanes placées dans la chambre ;
   - une entrée configurée pour introduire le mélange air/huile dans la chambre ;
   - une première sortie configurée pour évacuer l'huile séparée du mélange air/huile ;
   - une seconde sortie configurée pour évacuer l'air déshuilé du mélange air/huile ;
- le décanteur statique est rapporté sur le carter ou le décanteur statique est venu de matière avec le carter ;
- la chambre de décantation est annulaire et délimitée radialement par une paroi interne et une paroi externe coaxiales, chacune des chicanes reliant radialement les parois interne et externe ;
- le décanteur statique comprend une première rangée de chicanes et une seconde rangée de chicanes adjacente à la première rangée, les chicanes de la première rangée étant décalées par rapport aux chicanes de la seconde rangée ;
- l'huile séparée du mélange air/huile est stockée dans un réservoir du turbogénérateur par gravité ou par l'intermédiaire d'une pompe ;
- l'air déshuilé du mélange air/huile est soit rejeté à l'extérieur du turbogénérateur soit injecté dans une entrée d'air du turbomoteur ou dans une tuyère d'échappement du turbomoteur ;
- le turbomoteur comprend un décanteur cinétique, le mélange air/huile provenant du décanteur cinétique du turbomoteur ;
- la génératrice électrique comprend un circuit de refroidissement et de lubrification alimenté par de l'huile provenant dudit réservoir du turbogénérateur, et en ce que ledit réservoir forme un réservoir commun à la génératrice électrique et au turbomoteur.

La présente invention concerne encore un aéronef comprenant un turbogénérateur tel que décrit précédemment.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue schématique d'un turbogénérateur selon un premier mode de réalisation de l'invention ;
[Fig.2] la figure 2 est une vue schématique d'un turbogénérateur selon un second mode de réalisation de l'invention ;
[Fig.3] la figure 3 est une vue schématique d'un turbogénérateur selon un troisième mode de réalisation de l'invention ;
[Fig.4] la figure 4 est une vue schématique d'un turbogénérateur selon un quatrième mode de réalisation de l'invention ;
[Fig.5] la figure 5 est une vue schématique d'un turbogénérateur selon un cinquième mode de réalisation de l'invention ;
[Fig.6] la figure 6 est une vue en coupe transversale, schématique, d'un décanteur statique des turbogénérateurs illustrés sur les figures 1 à 5 ;
[Fig.7] la figure 7 est une vue de dessus déroulée (ou mise à plat) schématique du décanteur illustré sur les figures 1 à 6.

### Description détaillée de l'invention

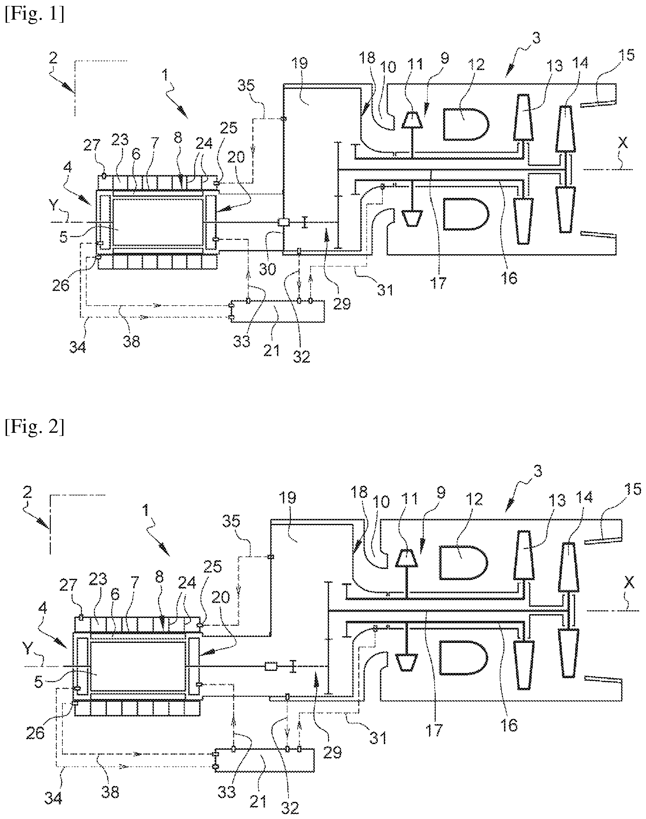

Sur les figures 1 à 5 est représenté schématiquement un turbogénérateur 1 pour un aéronef 2. L'aéronef 2 est par exemple un avion, un hélicoptère ou un drone.

Par convention, dans la présente demande, les éléments/composants ayant les mêmes références numériques sur différentes figures correspondent à des éléments/composants identiques.

Le turbogénérateur 1 comprend un turbomoteur 3 et au moins une génératrice électrique 4 comprenant un rotor 5 entrainé mécaniquement par le turbomoteur 3 et un stator 6 soutenu par un carter 7 (ou une carcasse) de la génératrice électrique 4. Le turbogénérateur pourrait comprendre plusieurs génératrices électriques.

Selon l'invention, le turbogénérateur 1 comprend un décanteur statique 8 d'un mélange air/huile provenant du turbomoteur 3, le décanteur statique 8 étant positionné autour du carter 7 de la génératrice électrique 4.

Selon les modes de réalisation illustrés sur les figures 1 à 5, le turbomoteur 3 comprend un circuit primaire 9 comportant d'amont en aval (suivant le sens d'écoulement des gaz) une entrée d'air 10, au moins un compresseur 11, une chambre de combustion 12, au moins une turbine de détente 13, au moins une turbine libre de transmission de puissance 14 et une tuyère d'échappement 15.

Le ou les compresseurs 11, la chambre de combustion 12 et la ou les turbines de détente 13 forment un générateur de gaz.

Les rotors du compresseur 11 et de la turbine de détente 13 sont reliés par un arbre d'entrainement 16.

Le rotor de la turbine libre 14 est relié à un arbre de sortie 17, l'arbre de sortie 17 étant généralement coaxial avec l'arbre d'entrainement 16 et disposé à l'intérieur de ce dernier, mais il peut aussi être parallèle non coaxial.

Le turbomoteur 3 est défini suivant un axe X qui correspond à l'axe de rotation des arbres d'entrainement et de sortie 16, 17.

En variante, le circuit primaire du turbomoteur pourrait comprendre une entrée d'air, au moins un compresseur, une chambre de combustion, au moins une turbine de détente, et une tuyère d'échappement. Autrement dit, un tel turbomoteur ne comprendrait pas de turbine libre et comprendrait un unique arbre d'entrainement reliant les rotors du compresseur et de la turbine de détente.

La génératrice électrique 4 transforme la puissance mécanique générée par le turbomoteur 3 en une puissance électrique. La puissance électrique est par exemple destinée à l'alimentation d'actionneurs électriques des propulseurs de l'aéronef ou à être stockée au sein de batteries.

Le rotor 5 de la génératrice électrique 4 est entrainé mécaniquement par le turbomoteur 3. Plus précisément, le rotor 5 de la génératrice électrique 4 peut être entrainé directement ou indirectement par l'arbre d'entrainement 16 ou l'arbre de sortie 17 du turbomoteur 3.

La génératrice électrique 4 est définie suivant un axe Y qui correspond à l'axe de rotation du rotor 5.

Par convention, dans la présente demande, les termes « amont » et « aval » sont définis par rapport au sens de circulation des gaz dans le circuit primaire 9 du turbomoteur 3.

On entend par « axial » ou « axialement » toute direction parallèle à l'axe X du turbomoteur 3 ou l'axe Y de la génératrice électrique 4, et par « radial » ou « radialement » toute direction perpendiculaire à l'axe X du turbomoteur 3 ou l'axe Y de la génératrice électrique 4.

De même, par convention dans la présente demande, les termes « interne » et « externe » associés au turbomoteur 3 sont définis radialement par rapport à l'axe X du turbomoteur 3, et les termes « interne » et « externe » associés à la génératrice électrique 4 sont définis radialement par rapport à l'axe Y de la génératrice électrique 4.

Le turbomoteur 3 comprend en outre un circuit secondaire 18 dans lequel circule de l'air et de l'huile utilisés principalement pour refroidir, étanchéifier et lubrifier le turbomoteur 3. L'air et l'huile sont injectés dans le circuit secondaire 18 à différents endroits selon les besoins. Le circuit secondaire 18 comprend une enceinte 19 disposée à l'amont du turbomoteur 3 dans laquelle est collectée la majeure partie de l'air, l'air étant dans cette enceinte 19 chargé en huile. Plus précisément, l'enceinte 19 est disposée en amont du générateur de gaz, et autrement dit en amont de l'entrée d'air 10 du turbomoteur 3. Le mélange air/huile décanté par le décanteur statique 8 peut provenir de l'enceinte 19 du circuit secondaire 18, ou plus généralement du circuit secondaire 18.

La génératrice électrique 4 peut comprendre un circuit de refroidissement distinct du circuit secondaire 18 du turbomoteur 3 dans lequel circule un fluide de refroidissement (liquide ou gazeux). Le fluide circulant dans le circuit de refroidissement de la génératrice électrique 4 peut être de l'huile, ou encore l'air déshuilé par le décanteur statique 8, ou un autre fluide caloporteur.

La génératrice électrique 4 peut comprendre un circuit de refroidissement et de lubrification 20 dans lequel circule de l'huile. Le circuit de refroidissement et de lubrification 20 permet notamment de refroidir le rotor et le stator de la génératrice électrique mais également de lubrifier des paliers guidant le rotor et des joints d'étanchéité dynamique.

Tel qu'indiqué ci-dessus, selon l'invention, le turbogénérateur 1 comprend un décanteur statique 8 d'un mélange air/huile provenant du turbomoteur 3, le décanteur statique 8 étant positionné autour ou sur le pourtour du carter 7. Le décanteur statique 8 (ou séparateur statique) permet de traiter le mélange air/huile en séparant l'huile et l'air. Le décanteur est dit « statique » puisque l'ensemble des composants formant le décanteur sont statiques ou fixes dans le repère du turbogénérateur.

Le décanteur statique 8 peut être rapporté, en partie ou en totalité, directement ou indirectement, sur le carter 7. Dans une telle configuration, le décanteur statique peut être démonté indépendamment du carter, cela facilite notamment une opération de maintenance ou de réparation sur le décanteur statique.

Le décanteur statique 8 peut également être venu de matière, en partie ou en totalité, avec le carter 7.

Le décanteur statique 8 peut comprendre une partie (par exemple une paroi) formée par le carter 7 de la génératrice électrique 4.

Le décanteur statique seul ou combiné au carter peut être obtenu par fabrication additive (prototypage rapide). Un tel procédé permet de fabriquer des pièces aux formes complexes.

L'air déshuilé par le décanteur statique 8 peut être soit rejeté à l'extérieur du turbogénérateur 1 soit injecté dans l'entrée d'air 10 du turbomoteur 3 ou dans la tuyère d'échappement 15 du turbomoteur 3. Lorsque le mélange air/huile décanté par le décanteur statique 8 provient du circuit secondaire 18 du turbomoteur, l'évacuation de l'air déshuilé permet de réguler la pression dans le circuit secondaire 18.

L'huile séparée (ou isolée) par le décanteur statique 8 est stockée dans un réservoir du turbogénérateur par gravité ou par l'intermédiaire d'une pompe.

Le turbogénérateur 1 peut comprendre un unique réservoir d'huile commun 21 au turbomoteur 3 et à la génératrice électrique 4. Dans une telle configuration, l'huile séparée par le décanteur statique est stockée dans l'unique réservoir 21.

Le turbogénérateur 1 peut comprendre un premier réservoir dédié au turbomoteur 3 et un second réservoir dédié à la génératrice électrique 4. Les premier et second réservoirs peuvent être accolés ou distants l'un de l'autre, afin d'être connectés séparément au turbomoteur 3 et à la génératrice électrique 4. Dans une telle configuration, l'huile séparée par le décanteur statique est soit stockée dans le premier réservoir et/ou le second réservoir.

Le turbomoteur 3 peut comprendre un décanteur cinétique 22 ou dynamique. Dans une telle configuration, le mélange air/huile décanté par le décanteur statique 8 provient alors du décanteur cinétique 22 du turbomoteur 3. Le décanteur statique 8 assure ainsi une seconde décantation de manière à accroitre la quantité d'huile récupérée, et autrement dit minimiser les pertes d'huile. Un décanteur dit cinétique comprend au moins un composant mobile, et par exemple une roue mobile en rotation dont la fonction est de séparer l'huile et l'air sous l'effet de la force centrifuge. Un décanteur cinétique est par exemple placé dans l'enceinte 19 du circuit secondaire 18.

Le décanteur statique 8 peut comprendre plus précisément :
- une chambre de décantation 23 du mélange air/huile ;
- une pluralité de chicanes 24 (ou déflecteurs) placées dans la chambre 23 ;
- une entrée 25 configurée pour introduire le mélange air/huile dans la chambre 23 ;
- une première sortie 26 configurée pour évacuer l'huile séparée (ou isolée) du mélange air/huile ;
- une seconde sortie 27 configurée pour évacuer l'air déshuilé du mélange air/huile.

L'écoulement du mélange air/huile est assuré par la différence de pression entre l'entrée 25 et les première et seconde sorties 26, 27.

La chambre de décantation 23 du décanteur statique 8 peut être compartimentée.

Les chicanes 24 du décanteur statique 8 permettent de perturber l'écoulement du mélange air/huile, et autrement dit de modifier la direction d'écoulement du mélange air/huile au sein de la chambre de décantation 23. Lorsque le mélange air/huile heurte une chicane, les gouttelettes d'huile sont retenues par adhérence sur la chicane tandis que l'air poursuit son chemin. On comprend ainsi que l'efficacité de la décantation dépend de l'importance des contacts ou des interactions entre le mélange air/huile et les éléments disposés à l'intérieur du décanteur statique 8 (et notamment les chicanes).

Le décanteur statique 8 peut comprendre une ou plusieurs rangées 28 de chicanes 24. Lorsque le décanteur statique 8 comprend plusieurs rangées 28 de chicanes 24, les chicanes de deux rangées adjacentes peuvent être décalées les unes par rapport aux autres. Les chicanes 24 peuvent par exemple être disposées en quinconce. Chacune des chicanes 24 peut par exemple se présenter sous la forme d'une ailette plane ou vrillée.

L'entrée 25 et les première et seconde sorties 26, 27 du décanteur statique 8 peuvent se présenter par exemple chacune sous la forme d'un embout configuré pour être raccordé à un embout complémentaire d'un élément destiné à transférer un fluide (par exemple un conduit).

Selon les modes de réalisation illustrés sur les figures 1 à 5, le turbogénérateur 1 comprend une unique génératrice électrique 4. Tel qu'indiqué ci-dessus, le turbogénérateur pourrait comprendre plusieurs génératrices électriques. La génératrice électrique 4 est rapporté sur le turbomoteur 3 au niveau d'une extrémité amont du turbomoteur 3, la génératrice électrique 4 se trouvant accolée à l'enceinte 19 du circuit secondaire 18 du turbomoteur 3. L'axe Y de la génératrice électrique 4 est parallèle à l'axe X du turbomoteur 3. Le rotor 5 de de la génératrice électrique 4 est entrainé par l'arbre de sortie 17 du turbomoteur 3 via un train d'engrenages 29.

Selon les modes de réalisation illustrés sur les figures 1, 3 à 5, l'espace intérieur de la génératrice électrique 4 est isolé de l'enceinte 19 du circuit secondaire 18 via une cloison d'étanchéité 30.

Selon le mode de réalisation illustré sur la figure 2, l'espace intérieur de la génératrice électrique 4 communique avec l'enceinte 19 du circuit secondaire 18.

Selon les modes de réalisation illustrés sur les figures 1 à 5, le turbogénérateur 1 comprend un unique réservoir d'huile 21 commun au turbomoteur 3 et à la génératrice électrique 4. Le circuit secondaire 18 du turbomoteur 3 et le circuit de refroidissement et de lubrification 20 de la génératrice électrique 4 sont alimentés avec de l'huile provenant du réservoir commun 21.

Le circuit secondaire 18 du turbomoteur 3 est raccordé au réservoir commun 21 via au moins un conduit d'alimentation 31 et au moins un conduit d'échappement 32.

Selon les modes de réalisation illustrés sur les figures 1 à 5, la génératrice électrique 4 comprend un circuit de refroidissement et de lubrification 20 dans lequel circule de l'huile. Le circuit de refroidissement et de lubrification 20 de la génératrice électrique 4 est raccordé au réservoir commun 21 via au moins un conduit d'alimentation 33 et au moins un conduit de retour 34. Selon les modes de réalisation illustrés sur les figures 1 à 5, le décanteur statique 8 est disposé sur la périphérie externe du carter 7, le décanteur statique 8 étant directement en contact avec la périphérie externe du carter 7.

Selon les modes de réalisation illustrés sur les figures 1 à 5, le décanteur statique 8 comprend plus précisément :
- une chambre de décantation 23 du mélange air/huile ;
- une pluralité de chicanes 24 placées dans la chambre 23 ;
- une entrée 25 configurée pour introduire le mélange air/huile dans la chambre 23 ;
- une première sortie 26 configurée pour évacuer l'huile séparée (ou isolée) du mélange air/huile ;
- une seconde sortie 27 configurée pour évacuer l'air déshuilé du mélange air/huile.

Selon les modes de réalisation illustrés sur les figures 1, 2, 4 à 5, l'entrée 25 du décanteur statique 8 est raccordé à l'enceinte 19 du circuit secondaire 18 via un conduit d'alimentation 35. Le mélange air/huile décanté par le décanteur statique 8 provient ainsi de l'enceinte 19 du circuit secondaire 18.

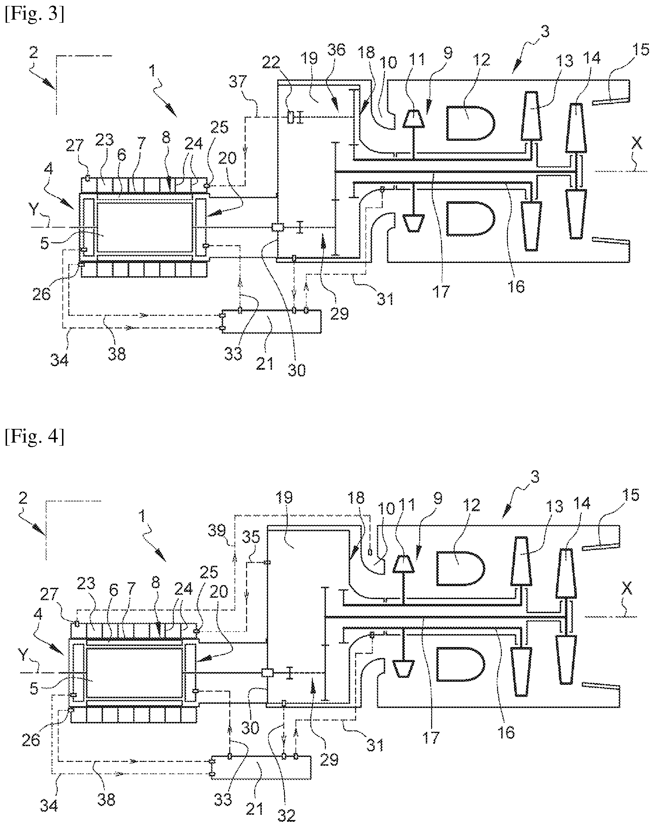

Selon le mode de réalisation illustré sur la figure 3, le turbomoteur 3 comprend un décanteur cinétique comportant un composant mobile entrainé par l'arbre d'entrainement 16 via un train d'engrenages 36. Le décanteur cinétique est disposé dans l'enceinte 19 du circuit secondaire 18. L'entrée 25 du décanteur statique 8 est raccordée à une sortie du décanteur cinétique via un conduit d'alimentation 37. Le mélange air/huile décanté par le décanteur statique 8 provient ainsi du décanteur cinétique du turbomoteur 3.

Selon les modes de réalisation illustrés sur les figures 1 à 5, la première sortie 26 du décanteur statique 8 est raccordée au réservoir d'huile commun 21 via un conduit d'échappement 38. L'huile séparée par le décanteur statique 8 est ainsi stockée dans le réservoir d'huile commun 21. Selon le mode de réalisation illustré sur la figure 4, la seconde sortie 27 du décanteur statique 8 est raccordée à l'entrée d'air 10 du turbomoteur 3 via un conduit d'échappement 39. L'air déshuilé par le décanteur statique 8 est ainsi injecté dans l'entrée d'air 10 du turbomoteur 3.

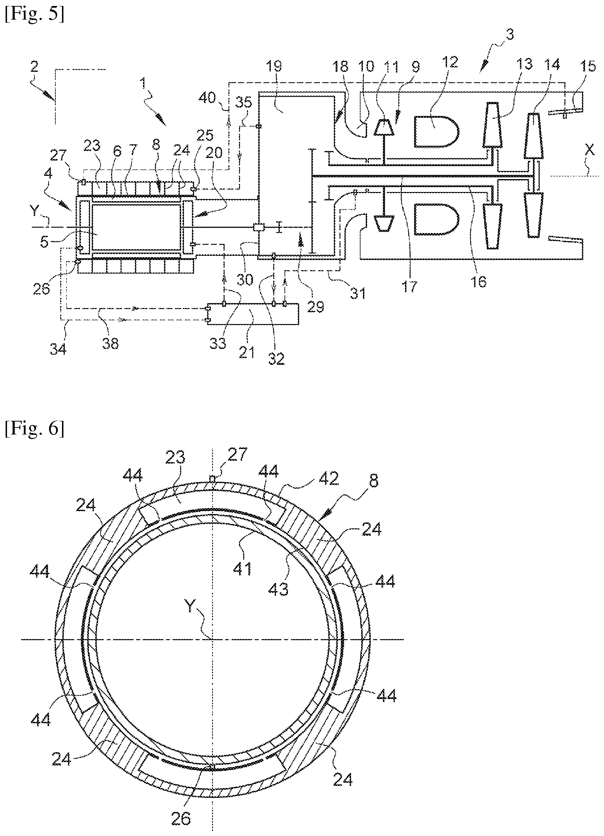

Selon le mode de réalisation illustré sur la figure 5, la seconde sortie 27 du décanteur statique 8 est raccordée à la tuyère d'échappement 15 du turbomoteur 3 via un conduit d'échappement 40. L'air déshuilé par le décanteur statique 8 est ainsi injecté dans la tuyère d'échappement 15 du turbomoteur 3.

Selon les modes de réalisation illustrés sur les figures 1 à 5, et plus précisément, tel qu'illustré sur la figure 6, la chambre de décantation 23 est annulaire et délimitée radialement par une paroi interne 41 et une paroi externe 42 coaxiales, chacune des chicanes 24 reliant radialement les parois interne et externe 41, 42. La paroi interne 41 est formée ici par le carter 7.

Néanmoins, selon une alternative non représentée, la paroi externe 42 peut être formée par le carter 7, la paroi interne 41 constituant alors une peau intérieure du carter.

La paroi interne 41 comprend un circuit d'évacuation 43 de l'huile séparée, ainsi que des orifices 44 communiquant à la fois avec la chambre de décantation 23 et le circuit d'évacuation 43. Les gouttelettes d'huile retenues par adhérence sur les chicanes 24 s'écoulent jusqu'aux orifices 44. Le circuit d'évacuation 43 collecte et rassemble l'huile séparée. La première sortie 26 communique avec le circuit d'évacuation 43. Avantageusement, la première sortie 26 sera placée à 6h par analogie au cadran d'une horloge.

La seconde sortie 27 du décanteur statique 8 est disposée au niveau de la paroi externe 42.

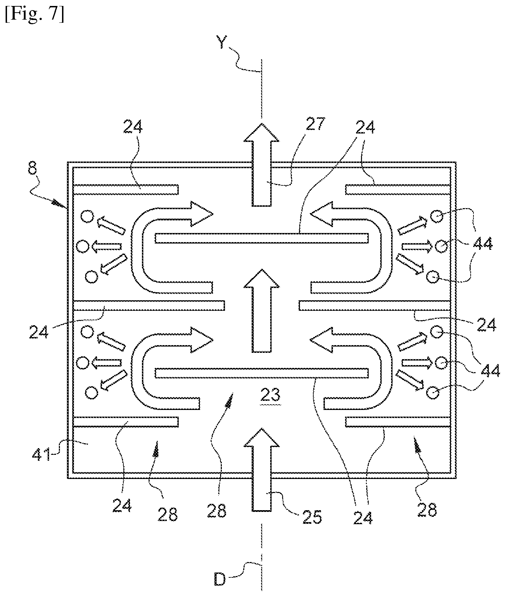

Tel qu'illustré sur la figue 7, le décanteur statique 8 comprend plusieurs rangées axiales 28 de chicanes 24, autrement dit des rangées 28 de chicanes 24 s'étendant suivant l'axe Y de la génératrice électrique 4. Les chicanes 24 sont disposées en quinconce et se présentent chacune sous la forme d'une ailette plane reliant les parois interne et externe 41, 42. La paroi externe 42 de la chambre de décantation 23 n'est pas représentée sur la figure 7.

Le mélange air/huile est défini par une direction d'écoulement D, chacune des chicanes 24 étant disposée perpendiculairement par rapport à cette direction d'écoulement D.

## Revendications

1. Turbogénérateur (1) pour un aéronef (2) comprenant :
- un turbomoteur (3) ;
- une génératrice électrique (4) comprenant un rotor (5) entrainé mécaniquement par le turbomoteur (3) et un stator (6) soutenu par un carter (7) de la génératrice électrique (4);
**caractérisé en ce que** le turbogénérateur (1) comprend un décanteur statique (8) d'un mélange air/huile provenant du turbomoteur (3), le décanteur statique (8) étant positionné autour du carter (7) de la génératrice électrique (4).

2. Turbogénérateur (1) selon la revendication 1, **caractérisé en ce qu'**au moins une paroi (41, 42) du décanteur statique (8) est formée par le carter (7) de la génératrice électrique (4).

3. Turbogénérateur (1) selon l'une des revendications précédentes, **caractérisé en ce que** le décanteur statique (8) comprend :
- une chambre de décantation (23) du mélange air/huile ;
- une pluralité de chicanes (24) placées dans la chambre (23) ;
- une entrée (25) configurée pour introduire le mélange air/huile dans la chambre (23) ;
- une première sortie (26) configurée pour évacuer l'huile séparée du mélange air/huile ;
- une seconde sortie (27) configurée pour évacuer l'air déshuilé du mélange air/huile.

4. Turbogénérateur (1) selon l'une des revendications précédentes, **caractérisé en ce que** le décanteur statique (8) est rapporté sur le carter (7) ou le décanteur statique (8) est venu de matière avec le carter (7).

5. Turbogénérateur (1) selon l'une des revendications 3 à 4, **caractérisé en ce que** la chambre de décantation (23) est annulaire et délimitée radialement par une paroi interne (41) et une paroi externe (42) coaxiales, chacune des chicanes (24) reliant radialement les parois interne et externe (41, 42).

6. Turbogénérateur (1) selon l'une des revendications 3 à 5, **caractérisé en ce que** le décanteur statique (8) comprend une première rangée (28) de chicanes (24) et une seconde rangée (28) de chicanes (24) adjacente à la première rangée (28), les chicanes (24) de la première rangée (28) étant décalées par rapport aux chicanes (24) de la seconde rangée (28).

7. Turbogénérateur (1) selon l'une des revendications 3 à 6, **caractérisé en ce que** l'huile séparée du mélange air/huile est stockée dans un réservoir du turbogénérateur (1) par gravité ou par l'intermédiaire d'une pompe.

8. Turbogénérateur (1) selon l'une des revendications 3 à 7, **caractérisé en ce que** l'air déshuilé du mélange air/huile est soit rejeté à l'extérieur du turbogénérateur (1) soit injecté dans une entrée d'air (10) du turbomoteur (3) ou dans une tuyère d'échappement (15) du turbomoteur (3).

9. Turbogénérateur (1) selon l'une des revendications précédentes, **caractérisé en ce que** le turbomoteur (3) comprend un décanteur cinétique, le mélange air/huile provenant du décanteur cinétique du turbomoteur (3).

10. Turbogénérateur (1) selon la revendication 7, **caractérisé en ce que** la génératrice électrique (4) comprend un circuit de refroidissement et de lubrification (20) alimenté par de l'huile provenant dudit réservoir du turbogénérateur (1), et **en ce que** ledit réservoir forme un réservoir commun (21) à la génératrice électrique (4) et au turbomoteur (3).

11. Aéronef (2) comprenant un turbogénérateur (1) selon l'une des revendications précédentes.

## Patentansprüche

1. Turbogenerator (1) für ein Luftfahrzeug (2), der Folgendes umfasst:
- einen Turbomotor (3);
- einen Stromgenerator (4), der einen vom Turbomotor (3) mechanisch angetriebenen Rotor (5) und einen Stator (6) umfasst, der von einem Gehäuse (7) des Stromgenerators (4) abgestützt wird;
**dadurch gekennzeichnet, dass** der Turbogenerator (1) einen statischen Dekanter (8) eines vom Turbomotor (3) kommenden Luft/Öl-Gemisches umfasst, wobei der statische Dekanter (8) rund um das Gehäuse (7) des Stromgenerators (4) angeordnet ist.

2. Turbogenerator (1) nach Anspruch 1, **dadurch gekennzeichnet, dass** mindestens eine Wand (41, 42) des statischen Dekanters (8) vom Gehäuse (7) des Stromgenerators (4) gebildet wird.

3. Turbogenerator (1) nach einem der vorstehenden Ansprüche, **dadurch gekennzeichnet, dass** der statische Dekanter (8) Folgendes umfasst:
- eine Absetzkammer (23) des Luft/Öl-Gemisches;
- mehrere Umlenkplatten (24), die in der Kammer (23) angeordnet sind;
- einen Einlass (25), der so ausgebildet ist, dass das Luft/Öl-Gemisch in die Kammer (23) eingeführt wird;
- einen ersten Auslass (26), der so ausgebildet ist, dass das vom Luft/Öl-Gemisch abgeschiedene Öl abgeführt wird;
- einen zweiten Auslass (27), der so ausgebildet ist, dass die entölte Luft des Luft/Öl-Gemisches abgeführt wird.

4. Turbogenerator (1) nach einem der vorstehenden Ansprüche, **dadurch gekennzeichnet, dass** der statische Dekanter (8) auf dem Gehäuse (7) montiert ist oder der statische Dekanter (8) mit dem Gehäuse (7) einstückig ausgebildet ist.

5. Turbogenerator (1) nach einem der Ansprüche 3 bis 4, **dadurch gekennzeichnet, dass** die Absetzkammer (23) ringförmig ist und durch eine Innenwand (41) und eine Außenwand (42), die koaxial sind, radial begrenzt ist, wobei jede der Umlenkplatten (24) die Innen- und die Außenwand (41, 42) radial verbindet.

6. Turbogenerator (1) nach einem der Ansprüche 3 bis 5, **dadurch gekennzeichnet, dass** der statische Dekanter (8) eine erste Reihe (28) von Umlenkplatten (24) und eine zweite Reihe (28) von Umlenkplatten (24) neben der ersten Reihe (28) umfasst, wobei die Umlenkplatten (24) der ersten Reihe (28) in Bezug auf die Umlenkplatten (24) der zweiten Reihe (28) versetzt sind.

7. Turbogenerator (1) nach einem der Ansprüche 3 bis 6, **dadurch gekennzeichnet, dass** das vom Luft/Öl-Gemisch abgeschiedene Öl durch Schwerkraft oder mittels einer Pumpe in einem Tank des Turbogenerators (1) gelagert wird.

8. Turbogenerator (1) nach einem der Ansprüche 3 bis 7, **dadurch gekennzeichnet, dass** die entölte Luft des Luft/Öl-Gemisches entweder außerhalb des Turbogenerators (1) abgeleitet wird oder in einen Lufteinlass (10) des Turbomotors (3) oder in eine Abgasdüse (15) des Turbomotors (3) eingeleitet wird.

9. Turbogenerator (1) nach einem der vorstehenden Ansprüche, **dadurch gekennzeichnet, dass** der Turbomotor (3) einen kinetischen Dekanter umfasst, wobei das Luft/Öl-Gemisch vom kinetischen Dekanter des Turbomotors (3) kommt.

10. Turbogenerator (1) nach Anspruch 7, **dadurch gekennzeichnet, dass** der Stromgenerator (4) einen Kühl- und Schmierkreislauf (20) umfasst, der mit Öl vom Tank des Turbogenerators (1) versorgt wird, und dadurch, dass der Tank einen gemeinsamen Tank (21) für den Stromgenerator (4) und den Turbomotor (3) bildet.

11. Luftfahrzeug (2), das einen Turbogenerator (1) nach einem der vorstehenden Ansprüche umfasst.

## Claims

1. A turbogenerator (1) for an aircraft (2) comprising:
- a turboshaft engine (3);
- an electric generator (4) comprising a rotor (5) driven mechanically by the turboshaft engine (3) and a stator (6) supported by a casing (7) of the electric generator (4);
**characterised in that** the turbogenerator (1) comprises a static decanter (8) of an air/oil mixture coming from the turboshaft engine (3), the static decanter (8) being positioned around the casing (7) of the electric generator (4).

2. The turbogenerator (1) according to claim 1, **characterised in that** at least one wall (41, 42) of the static decanter (8) is formed by the casing (7) of the electric generator (4).

3. The turbogenerator (1) according to one of the preceding claims, **characterised in that** the static decanter (8) comprises:
- a decantation chamber (23) for the air/oil mixture;
- a plurality of baffles (24) placed in the chamber (23);
- an inlet (25) configured to introduce the air/oil mixture into the chamber (23);
- a first outlet (26) configured to evacuate the oil separated from the air/oil mixture;
- a second outlet (27) configured to evacuate the de-oiled air from the air/oil mixture.

4. The turbogenerator (1) according to one of the preceding claims, **characterised in that** the static decanter (8) is fitted to the casing (7) or the static decanter (8) is integrally formed with the casing (7).

5. The turbogenerator (1) according to one of claims 3 to 4, **characterised in that** the decantation chamber (23) is annular and radially delimited by an internal wall (41) and an external wall (42) which are coaxial, each of the baffles (24) radially connecting the internal and external walls (41, 42).

6. The turbogenerator (1) according to any of claims 3 to 5, **characterised in that** the static decanter (8) comprises a first row (28) of baffles (24) and a second row (28) of baffles (24) adjacent to the first row (28), the baffles (24) of the first row (28) being offset relative to the baffles (24) of the second row (28).

7. The turbogenerator (1) according to one of the claims 3 to 6, **characterised in that** the oil separated from the air/oil mixture is stored in a reservoir of the turbogenerator (1) by gravity or by means of a pump.

8. The turbogenerator (1) according to one of claims 3 to 7, **characterised in that** the de-oiled air from the air/oil mixture is either discharged outside the turbogenerator (1) or injected into an air inlet (10) of the turboshaft engine (3) or into an exhaust nozzle (15) of the turboshaft engine (3).

9. The turbogenerator (1) according to one of the preceding claims, **characterised in that** the turboshaft engine (3) comprises a kinetic decanter, the air/oil mixture coming from the kinetic decanter of the turboshaft engine (3).

10. The turbogenerator (1) according to claim 7, **characterised in that** the electric generator (4) comprises a cooling and lubrication circuit (20) fed with oil coming from said reservoir of the turbogenerator (1), and **in that** said reservoir forms a common reservoir (21) for the electric generator (4) and the turboshaft engine (3).

11. An aircraft (2) comprising a turbogenerator (1) according to any of the preceding claims.
